# EUROPEAN PATENT APPLICATION

(11) **EP 0 830 929 A1**
(43) Date of publication of application: **25.03.1998**
(21) Application number: 97115677.3
(22) Date of filing: 10.09.1997
(51) Int. Cl.: B29C 43/18, B29C 70/46

(54) **Process for manufacturing rubber membranes with a textile insert**

(30) Priority: 10.09.1996 IT TO960738
(71) Applicant: SIGOM S.r.l., I-10078 Venaria, Torino (IT)
(72) Inventor: Spinelli, Massimo, 10100 Torino (IT)
(74) Representative: Di Francesco, Gianni

(57) **Abstract**

A process for manufacturing rubber membranes (30) with a textile insert (31) for use in vehicle braking systems, comprises the steps of:
cold injection moulding at least a pair of congruent rubber half-shells (22, 23) of disc-like shape with a central rounded portion;
interposing a textile insert (31) between the cold injected half-shells (22, 23);
closing the congruent half-shells (22, 23) on the textile insert (31) such that the insert copies the rounded shape of the half-shells;
vulcanising the two half-shells with the textile insert interposed therebetween, thereby obtaining a membrane (30) of disc-like shape having its central portion rounded with a textile insert inside.

## Description

### Field of the invention

The present invention refers to a process for manufacturing rubber membranes with a textile insert for use in vehicle braking systems, particularly on trailers. The invention further relates to a membrane obtained through said process.

### Background of the invention

The above kind of membranes for braking systems consist of a substantially disc-like rubber body with a reinforcing textile insert. The textile insert, of circular shape, is centred with respect to the membrane and extends to the membrane edge. At present, these membranes are manufactured through a pressing process by interposing the textile insert between two rubber lumps. A large number of membranes manufactured through this method turn out to be faulty, as the thickness of the rubber layers on the two sides of the insert is not uniform. In other instances, the insert is not centred in the membrane and can also protrude out of the rubber. As a result, many cull pieces are produced, as well as faulty membranes having a short useful life.

### Summary of the invention

It is an object of the present invention to provide a process yielding membranes not having the above discussed defects.

It is another object of the present invention to provide a process yielding textile insert substantially disc-like membranes not being flat but providing a rounded shape at least in their central portion, i.e. being pre-formed in accordance to the shape they have to take in operation.

The above and other objects and advantages are accomplished according to this invention by a process for manufacturing rubber membranes with a textile insert for use in vehicle braking systems, characterised in comprising the steps of:
cold injection moulding at least a pair of substantially congruent rubber half-shells of substantially disc-like shape with a central rounded portion;
interposing a textile insert between the cold injected half-shells;
closing the congruent half-shells on the textile insert such that said insert copies the rounded shape of said half-shells;
vulcanising the two half-shells with the textile insert interposed therebetween, thereby obtaining a membrane of substantially disc-like shape having its central portion rounded with a textile insert inside.

Other important features of the process and the membrane of this invention are claimed in the dependent claims.

### Brief description of the drawings

In order that the present invention may be well understood there will now be described a preferred embodiment thereof, given by way of example, reference being made to the accompanying drawings, in which:
- FIGS. 1, 2, 4, 6, 7, 9 and 11: are elevational side views of a plant for manufacturing membranes through the process of this invention, there being illustrated only the most important stages of the production cycle; and
- FIGS. 3, 5, 8 and 10: are enlarged views showing details of FIGS. 2, 4, 7 and 9, respectively.

### Detailed description of a preferred embodiment

In the accompanying drawings the manufacturing plant is arranged for producing simultaneously a pair of membranes. For a better understanding of the invention, however, reference is made to the production of a single membrane, being it obvious to those skilled in the art that the plant can be modified in order to produce a single membrane or a plurality of membranes simultaneously, according to requirements, still within the scope of this invention.

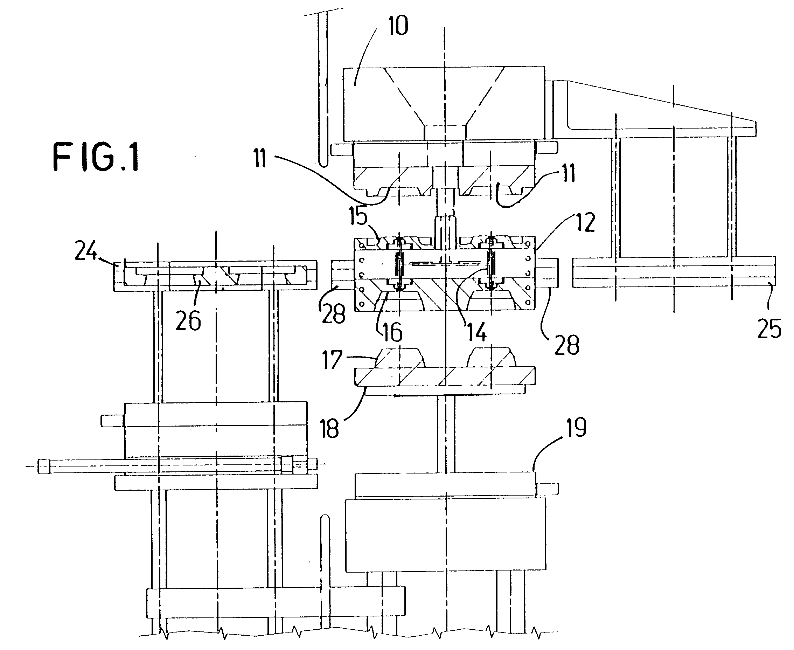

With reference initially to FIG. 1, numeral 10 designates an upper heating plate. On the bottom side of upper plate 10 there are provided a pair of concave moulding seats flanked in a horizontal plane. A thermally controlled injection plate 12 is fitted underneath the upper heating plate 10 and is supported by a central support 28 vertically movable by means of a hydraulic actuator that brings the thermally controlled injection plate 12 near to and away from the upper heating plate 10. Within the injection plate 12 there is provided a channel system 14 for injecting rubber on the upper and lower sides of injection plate 12, on which there are provided a male element 15 for the upper plate concave seat 11 and a female concave seat 16, the corresponding male of which is located on the upper side of an intermediate plate 18. Intermediate plate 18 is driven by a lower hydraulic stripper and slidably received in a vertical direction by a lower heating plate 19.

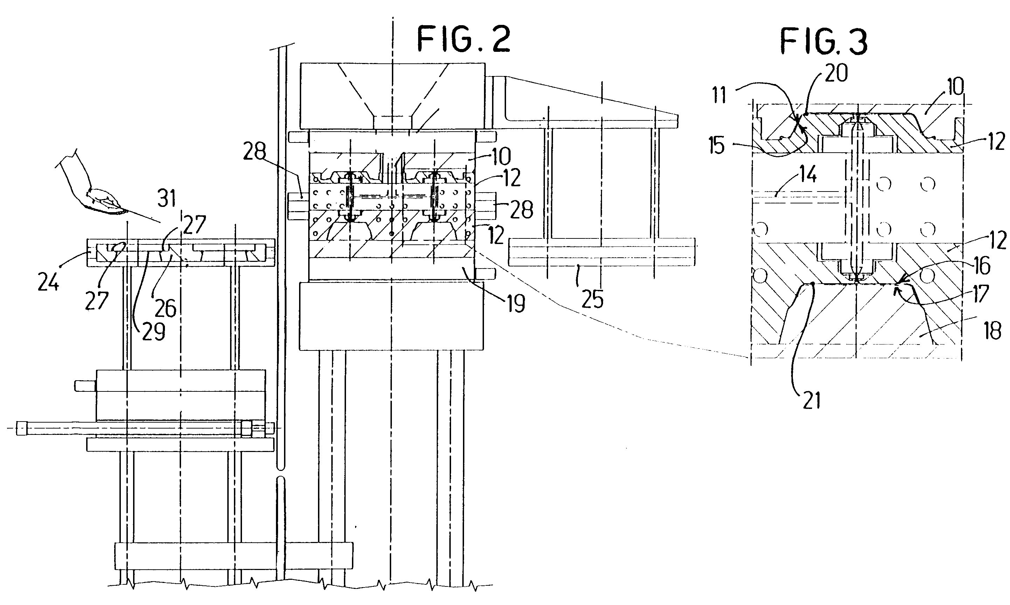

As shown in FIGS. 2 and 3, the thermally controlled injection plate 12, when joined to the upper heating plate 10 and the intermediate plate 18 defines two moulding chambers 20, 21, respectively, in which a pair of congruent half-shells of rubber material are formed by injection moulding. The half-shells concur in forming a membrane with a textile insert in accordance with the present invention. The half-shells have a substantially disc-like shape with a central rounded portion, similar to a normal dish.

From the open arrangement of FIG. 1, the central support 28 and the injection plate 12 are lifted vertically against the upper heating plate 10, closing the upper moulding chamber 20. In a similar manner, the intermediate plate 18 and the lower heating plate 19 are lifted against the lower side of the thermally controlled injection plate 12, thereby closing the lower moulding chamber 21.

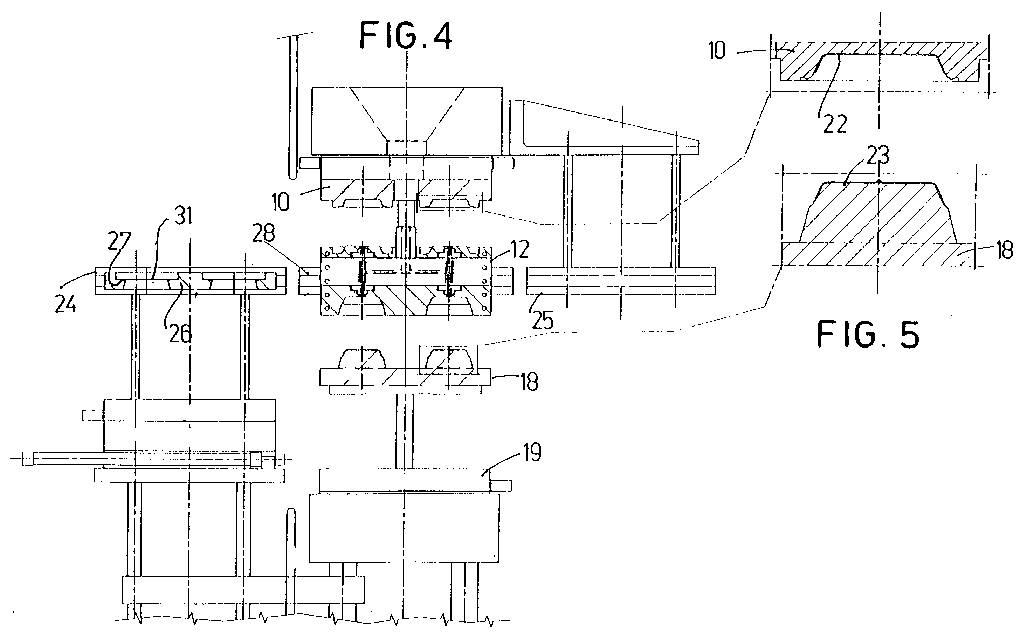

A pair of half-shells 22, 23 is so formed by cold injection in chambers 20, 21, respectively. Then the thermally controlled injection plate 12 is lowered back to its initial position, horizontally aligning the central support 28 between a front, horizontal fixed support 24 and a rear, horizontal fixed support 25. As shown in detail in FIG. 5, upon opening the press the raw rubber half-shells 22, 23 remain adherent to the concave surface 11 of the upper plate 10 and the convex or male surface 17 of the intermediate plate 18, respectively. Adhesion is due to the fact that the surfaces 11 and 17 are at a higher temperature than that of the walls of injection plate 12, whereby the raw rubber remains adherent to the hotter surface and comes off the colder one.

During the cold moulding stage (FIG. 2), a textile insert 31 is laid on a resting seat 27 on a plate 26 horizontally slidable on the front, fixed support 24. As will be apparent herein after, the three horizontal elements 24, 28 and 25 act as supports and horizontal guiding means to allow sliding motion of the insert support plate 26 and the injection plate 12.

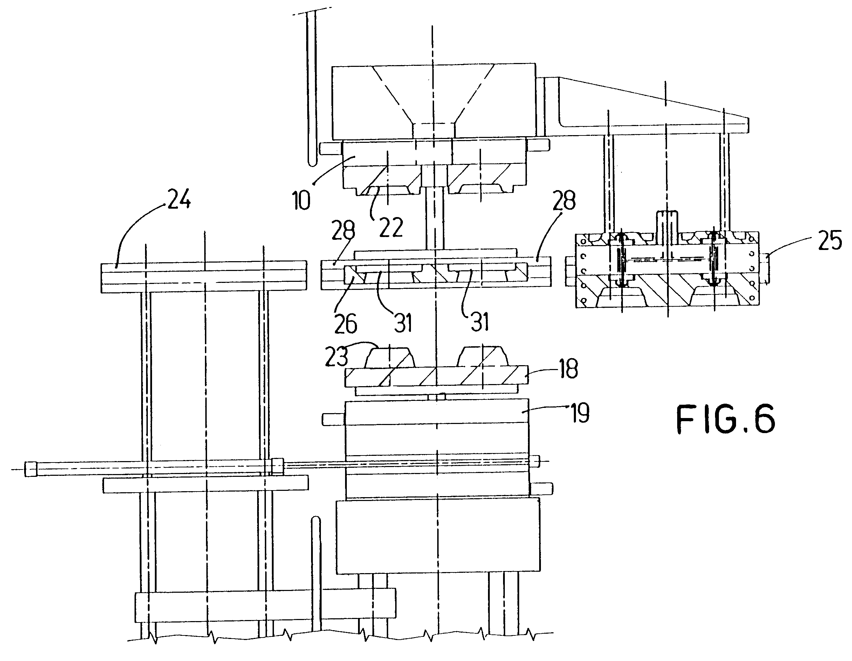

Referring to FIG. 6, the injection plate 12 is made to slide horizontally from the central support 28 to the rear support 25 in a passive position, while the plate 26 with the textile insert is made to slide from the front support 24 to the central support 28, in a position of vertical alignment relative to concave surface 11 and convex surface 17. These sliding movements are accomplished by driving means of known kind, not illustrated for simplicity, or manually.

The resting seat 27 for the textile insert 31 is formed about an aperture 29 of the insert support plate 26, in such manner that the insert is sustained at its edge.

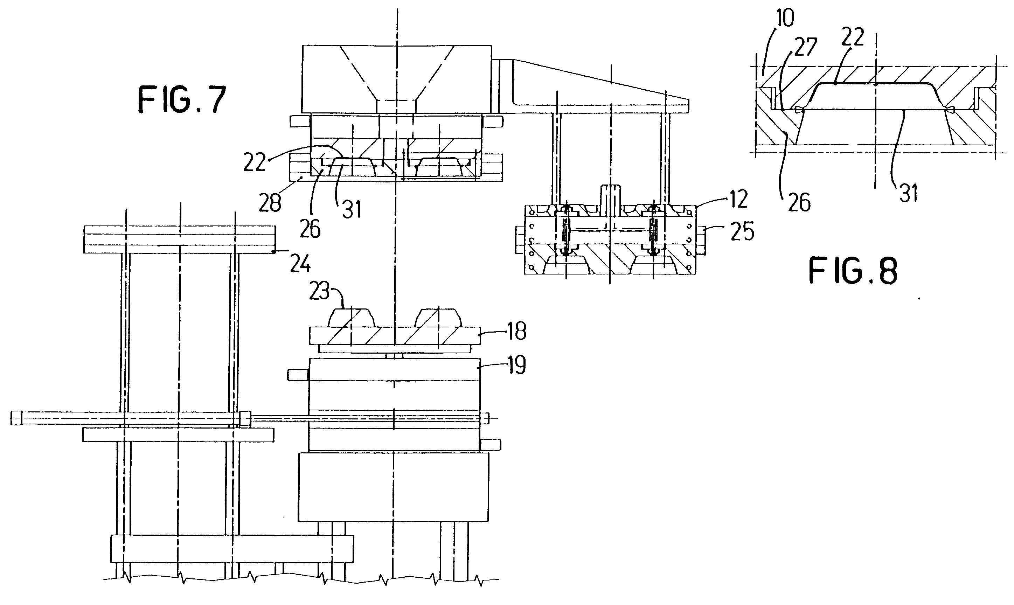

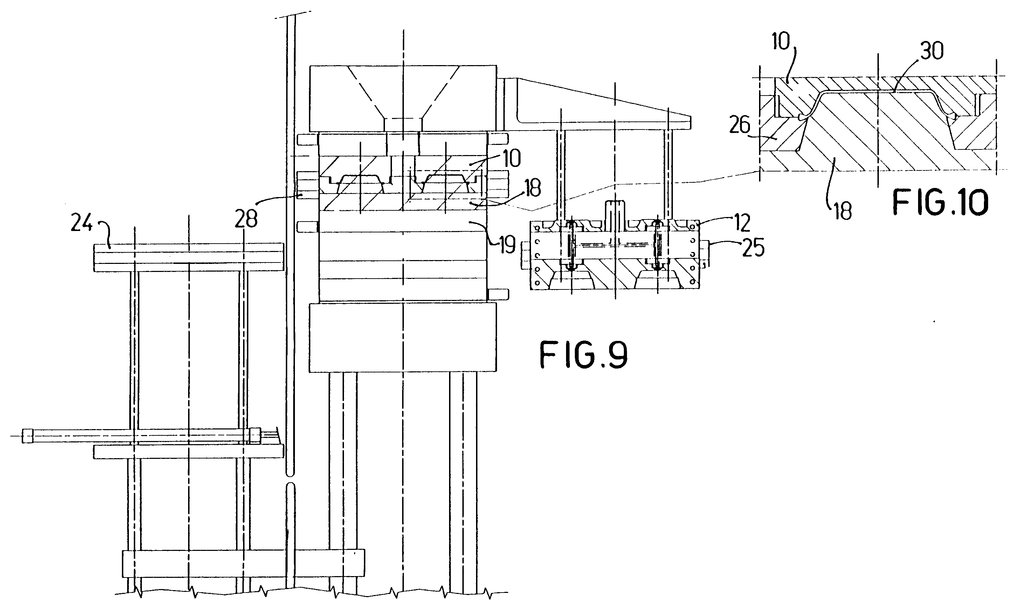

With reference to FIGS. 6 and 7, the central support 28 with plate 26 and insert 31 is lifted until the insert support peripheral seat 27 abuts against the upper heating plate 10, as shown in further detail in FIG. 8. In such an arrangement, the textile insert is taut and its edges are pinched between elements 26 and 11. Then, the intermediate plate 18 and the lower heating plate 19 are lifted (FIG. 9). In its end of stroke position, as shown in FIGS. 9 and 10, the lower rubber half-shell 23 on the intermediate plate 18 urges the textile insert 31 against the upper rubber half-shell 23 adhering to the upper heating plate 10. The insert is so pre-formed, as it is forced to copy the shape of the rounded half-shells between which it is interposed. With such an arrangement, where the press is closed, the half-shells are vulcanised and made to adhere intimately therebetween and with the textile insert.

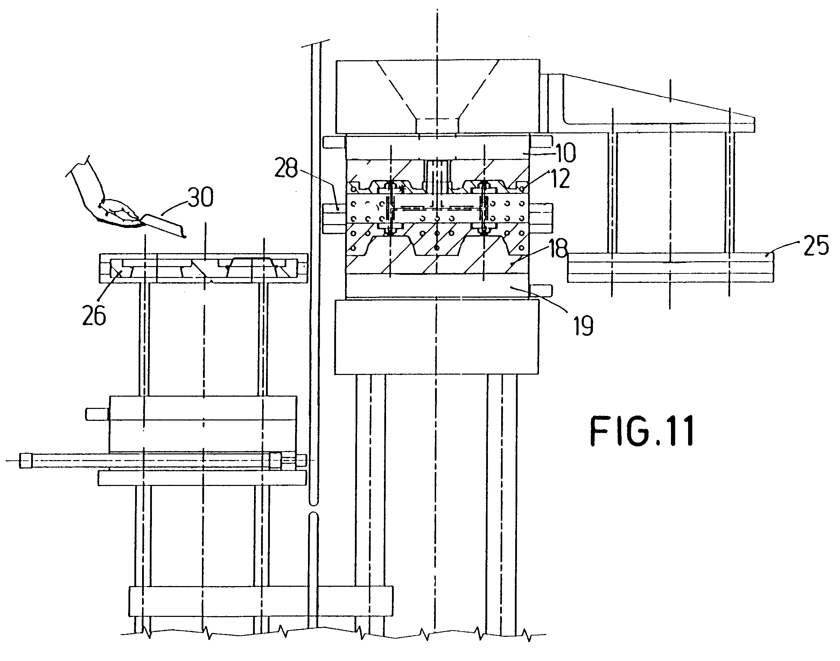

Then, the press is opened as shown in FIG. 6. The insert support plate 26 is slid forward from the central support 28 to the front support 24. The injection plate 12, in turn, shifts from the rear support 25 to the central one 28. The arrangement that is so reached is similar to that illustrated in FIG. 4. Finally, the finished membrane 30 is withdrawn from plate 26, as shown in FIG. 11, and a new production cycle can begin.

While a specific mode of carrying out the invention has been disclosed, it is to be understood that such disclosure has been merely for the purpose of illustration and that the invention is not to be limited in any manner thereby. Various modifications will be apparent to those skilled in the art in view of the foregoing example. The scope of the invention is to be limited only by the appended claims.

## Claims

1. A process for manufacturing rubber membranes (30) with a textile insert (31) for use in vehicle braking systems, characterised in comprising the steps of:
(a) cold injection moulding at least a pair of substantially congruent rubber half-shells (22, 23) of substantially disc-like shape with a central rounded portion;
(b) interposing a textile insert (31) between the cold injected half-shells (22, 23);
(c) closing the congruent half-shells (22, 23) on the textile insert (31) such that said insert copies the rounded shape of said half-shells;
(d) vulcanising the two half-shells with the textile insert interposed therebetween, thereby obtaining a membrane (30) of substantially disc-like shape having its central portion rounded with a textile insert inside.

2. A process as claimed in claim 1, wherein said step (a) comprises the steps of:
(a1) providing a thermally controlled injection plate (12) slidable upon a central horizontal support (28), said thermally controlled injection plate (12) providing:
- a convex moulding surface (15) adapted for defining a moulding chamber (20) for one (22) of said half-shells (22, 23) with a corresponding concave seat (11) of a first heating plate (10); and
- a concave moulding surface (16) adapted for defining a moulding chamber (21) for the other (23) of said half-shells (22, 23) with a corresponding convex seat (17) of an intermediate plate (18);
(a2) vertically closing said injection plate (12) between the first heating plate (10) and the intermediate plate (18);
(a3) cold injection moulding said half shells (22, 23) in their respective chambers (20, 21);
(a4) vertically spacing apart the first heating plate (10) and the intermediate plate (18) from the injection plate (12) with the raw rubber half-shells (22, 23) adhering to said surfaces (11, 17).

3. A process as claimed in the preceding claims, wherein said step (b) comprises the steps of:
(b1) laying a textile insert (31) over an aperture (27) of an insert support plate (26) horizontally slidable along a front horizontal support (24);
(b2) horizontally aligning said central support (28) with a rear horizontal support (25);
(b3) sliding said thermally controlled injection plate (12) from the central support (28) to the rear support (25);
(b4) sliding said insert support plate (26) from the front support (24) to the central support (28), vertically aligning the textile insert (31) between said half-shells.

4. A process as claimed in the preceding claims, wherein said step (d) is followed by the steps of:
(e1) horizontally aligning said front, central and rear supports (24, 28, 25);
(e2) sliding the insert support plate (26) from the central support (28) to the front support (24);
(e3) sliding said injection plate (12) from the rear support (25) to the central support (28).

5. A rubber membrane (30) with a textile insert (31) for use in vehicle braking systems, characterised by being manufactured through a process as claimed in any of the preceding claims.
